(19) Europäisches Patentamt
European Patent Office
Office européen des brevets

(11) **EP 1 568 422 B1**

(12) **EUROPEAN PATENT SPECIFICATION**

(45) Date of publication and mention
of the grant of the patent:
**31.01.2007 Bulletin 2007/05**

(51) Int Cl.:
**B21D 53/50** *(2006.01)*    **B21D 53/52** *(2006.01)*
**A44B 19/06** *(2006.01)*

(21) Application number: **05251134.2**

(22) Date of filing: **25.02.2005**

(54) **Metallic slide fastener element and method for manufacturing the same**

Reissverschluss und Verfahren zum Herstellen desselben

Fermeture à glissière métallique et son procédé de fabrication

(84) Designated Contracting States:
**DE ES FR GB IT TR**

(30) Priority: **25.02.2004 JP 2004049520**

(43) Date of publication of application:
**31.08.2005 Bulletin 2005/35**

(73) Proprietor: **YKK Corporation**
**Chiyoda-ku,**
**Tokyo (JP)**

(72) Inventors:
• **Yoshida, Makoto**
**Kurobe-shi**
**Toyama-ken (JP)**
• **Kozato, Futoshi**
**Namerikawa-shi**
**Toyama-ken (JP)**
• **Ozaki, Teruo**
**Namerikawa-shi**
**Toyama-ken (JP)**

(74) Representative: **Luckhurst, Anthony Henry**
**William**
**Marks & Clerk**
**90 Long Acre**
**London WC2E 9RA (GB)**

(56) References cited:
**GB-A- 1 397 862**        **US-A- 2 622 295**
**US-A- 2 685 127**

• **PATENT ABSTRACTS OF JAPAN vol. 004, no. 116 (M-027), 19 August 1980 (1980-08-19) -& JP 55 075836 A (YOSHIDA KOGYO KK <YKK>), 7 June 1980 (1980-06-07) -& US 4 306 347 A (YOSHIDA KOGYO K.K.) 22 December 1981 (1981-12-22)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

BACKGROUND OF THE INVENTION

1. Field of the Invention

The present invention relates to a slide fastener element to be manufactured by punching out a metallic flat type wire rod, and a method for manufacturing the element, according to the preamble of claims 1 and 6 (see for example JP-A-550758368 US-A-4306347).

2. Description of the Related Art

A metallic element of a slide fastener, the element comprising a coupling head and right and left leg portions extending separately as two branches from the head on a same plane, is generally manufactured according to the following two typical manufacturing methods. According to one of these methods, a long wire rod having a Y-shaped section is rolled out through multiple stages, and then this wire rod is cut out successively in a longitudinal direction of the wire rod in a desired thickness so as to obtain a Y-shaped element material. By deforming a portion of that material corresponding to a coupling head locally under a pressure, the engagement portion is formed and elements are produced. The elements produced in this way are implanted successively at a constant pitch on a side edge of a long fastener tape carried separately so as to manufacture a fastener chain continuously.

According to the other method, a flat type wire rod is punched out into the shape of an element by using a die or a punch successively, and it is deformed plastically under a pressure so as to form a coupling head, thereby producing elements individually. After the elements manufactured in this way are subjected to barrel polishing or chemical polishing, they are implanted successively along a side edge of a fastener tape at a constant pitch so as to produce a continuous fastener chain. In the element manufactured by the latter method, the shape in appearance and structure of the coupling head of the element are particularly wide-ranging, since the die and the punch can be formed into diversified shapes. In the simplest shape of the coupling head, one side of the central portion of the coupling head defined by combination of a trapezoidal shape and a rectangular shape is recessed while the other side is constituted of an engagement portion projecting in a mountainous shape. On the other hand, other typical structures have been disclosed in, for example, Japanese Patent Application Publication No. 59-10858 (patent document 1), Japanese Patent Application Publication No. 59-10859 (patent document 2), Japanese Utility Model Application Laid-Open No. 1-80012 (patent document 3) and the like.

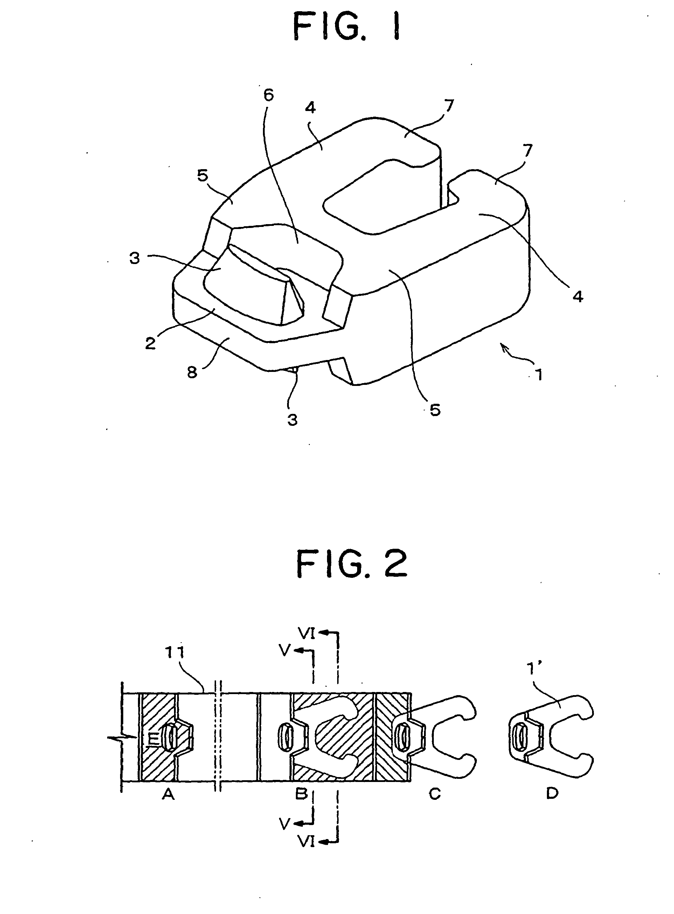

As for the typical shape and structure of an element obtained by punching out a flat type wire rod, which is disclosed in these patent documents 1 to 3, the element comprises a coupling head 2 and right and left leg portions 4 as shown in FIG. 1. The coupling head 2 includes a flat plate portion 8 having a thickness 1/3 of that of the leg portions 4, swollen portions 3, which are engagement portions swollen on front and rear faces substantially in a center of the flat plate portion, and fitting concave portions 6, which are formed in a flat face portion extending on the same plane as the leg portions of the flat plate portion 8, such that each of the fitting concave portions surrounds a side face on a leg portion side of the swollen portion 3 with a predetermined gap. A part of the swollen portion 3 of a mating element is fitted in between the fitting concave portion 6 and the swollen portion 3, so that the elements are engaged with each other. In addition, the element further comprises nipping portions 7 which are provided at front ends of the right and left leg portions 4 and extend so as to approach each other.

Meanwhile, in the metallic element in which the aforementioned metallic wire rod having a Y-shaped section subjected to being rolled out is cut and then, the engagement portion of the coupling head is molded by pressing, no abnormal quality face is formed on a processed surface of the element because an external peripheral faces of the right and left leg portions and the coupling head of the obtained element are rolled out, so that entirely uniform surface is obtained. However, as for the metallic element called an individual element which is disclosed in the patent documents 1 to 3, a sheared portion and a fracture portion are usually generated in a cut surface when the element is cut out and punched out with a punch. In the sheared portion, an extremely flat shear surface is formed and a fracture surface having a high roughness, containing fine unevenness like scratched flaw is formed in a part of the fracture portion. The metallic element called the individual element is often used in a slide fastener to be attached to a high quality product. Thus, in case of this individual element, an outside exposed surface of the element after implanted in a fastener tape needs to be finished at a high precision.

Further, this kind of the individual element is subjected to barrel polishing or chemical polishing for finishing after the element material is produced by punching out the metallic flat type wire rod by using the die and the punch as described above and at this time, the roughness of a fracture surface is often intensified by such polishing action. For the reason, after finished as a product, a difference between the shear surface and the fracture surface become evident. Thus, in a slide fastener in which such elements are implanted in the fastener tape, particularly the surface of an outside exposed portion of the element, that is, the outer side faces of right and left leg portions and the outer peripheral face of the coupling head look like not finished uniformly. This can be a fatal defect for a slide fastener attached to a high quality product.

On the other hand, to fix this kind of the metallic element to the fastener tape, a core thread portion formed on a side edge of the fastener tape is nipped by right and left leg portions and the right and left leg portions are caulked firmly. The fixing strength at this time depends on the amount of biting of the front end nipping portions of the right and left leg portions into the fastener tape and the nipping strength to the core thread portion. As long as this viewpoint is taken, the higher roughness of the inner peripheral face of each of the right and left leg portions is more preferable.

SUMMARY OF THE INVENTION

The present invention has been accomplished to solve the above-described problem, which is likely to occur in a conventional slide fastener element called individual element, and an object of the invention is to provide a metallic element whose finish to be exposed outside is performed uniformly with a high flatness and further, to provide a metallic element having a high fixing strength to a fastener tape and a method for effectively manufacturing the element.

Such an object is achieved by a slide fastener element, which is a basic configuration of a metallic slide fastener element of the invention obtained by punching out a flat type wire rod, in which at least a cut surface of a side face region comprising right and left side faces of a coupling head and an outside peripheral side faces of right and left leg portions has, from a plan viewpoint, a shear surface of 80% or more and a fracture surface of less than 20%. Such a metallic element is manufactured securely and effectively according to a method for manufacturing the slide fastener element in which a metallic flat type wire rod is disposed on a die and the flat type wire rod is punched out with a punch, this method being characterized in that a mouth on a punch side of the die or a peripheral edge of the die is chamfered at a radius of 0.01 to 1.0 mm and a clearance $T$ between the die and the punch is 0 to 30 $\mu$m.

An average surface roughness $Ra$ of the shear surface on the cut surface of an element material just after punching out is preferred to be 1.0$a$ or less and an average surface roughness $Ra$ of the shear surface is preferred to be 0.5$a$ or less. Further, it is preferable that the cut surface on at least an inner side of the leg portions of the slide fastener element has a shear surface of less than 80% while the remainder is a fracture surface. More preferably, the cut surface on the inner side of the leg portions is constituted of a shear surface of less than 50%.

According to the above-described manufacturing method, it is more preferable that the clearance ($T$) between the die and punch is 0.1 to 10 $\mu$m and the clearance ($T$) between the die and the punch and a thickness ($t$) of the flat type wire rod are preferred to satisfy the following equation (I):

$$0 < T/t \leq 0.001 \quad \cdots \quad (I)$$

According to the individual element of the present invention, because its cut surface by punching is constituted of the shear surface of 80% or more, the outer peripheral face to be exposed outside of the coupling head and the right and left leg portions, when the element is implanted in a fastener tape, is provided with intensified smoothness, so that a demand for a slide fastener applied to particularly a high quality product is satisfied. To realize this smoothness, it is preferable to adopt the above-described manufacturing method of the present invention, and further, if the clearance $T$ between the die and the punch is set to 0.1 to 10 $\mu$m, 90% or more of the cut surface can be constituted of the shear surface.

When a cut surface of metal is observed, the shear surface and fracture surface generally coexist on the cut surface. As for the shear surface and the fracture surface, if light is projected to a cut surface at a predetermined incident angle and a relating situation is observed from a position deviated from its just opposite position, the shear surface turns to dark black because the projected light is reflected regularly and conversely, the fracture surface seems to be white because the projected light is reflected irregularly. According to the present invention, the cut surface is so constructed that when the cut surface of the element obtained by punching out the flat type wire rod is observed, the area of a region occupied by the dark black is 80% or more with respect to a region occupied by the white. When 80% or more of the cut surface is constituted of the shear surface, the smoothness of the surface is high so that a high quality element uniformly finished at a high precision and having excellent in its appearance is produced. If the ratio is 90% or more, the fracture surface almost diminishes, so that it is excellent in terms of appearance design and can be applied as a more valuable product for a high quality brand product. To increase the ratio of the shear surface area to the cut surface, the method for manufacturing a slide fastener element of the present invention is capable of manufacturing the elements securely and effectively.

Meanwhile, in an element material obtained by punching out the flat type wire rod, burr is generated on a ridge line portion formed by cutting of the material if any particular process is not performed, and therefore, the material needs to pass through a special process such as barrel polishing or chemical polishing so as to obtain a final product. At this time, the shear surface produced at the time of punching out is flawed finely by rubbing due to grinding stone powder and then, the ratio of occupation by the shear surface area decreases as compared with the punching time. Nevertheless, in order to obtain the above-described element having the shear surface of 80% or more, the average surface roughness *Ra* of the shear surface in the cut surface needs to be 1.0*a* or less. If it is intended to obtain an element having the shear surface area of 90% or more, the average surface roughness *Ra* needs to be 0.5*a* or less.

On the other hand, at least the cut surface on the inner side of the leg portions of the aforementioned element is a portion to be attached to the fastener tape such that the fastener tape is nipped, and after this element is attached to the fastener tape, this portion is not exposed outside. Therefore, the area which the shear surface occupies at this portion is not so important and conversely, if the area which the fracture surface occupies is increased, the degree of fitting to the fastener tape is intensified, so that the fixing strength is increased. Thus, the area which the shear surface occupies in the cut surface on the inner side of the leg portions is set to less than 80% while the area which the fracture surface occupies is set to 20% or more. In order to intensify the fixing strength further, it is preferable to set the ratio of the fracture surface area to 50% or more.

To obtain such a cut surface, the clearance T between the die and the punch is set in a range of 0 to 30 $\mu$m and the mouth on the punch side of the die or the peripheral edge of the die is provided with a roundness of radius *R*. By setting this *R* to 0.01 to 1.0 mm, generation of crevice in the flat type wire rod is prevented and a slide fastener element in which the ratio of the shear surface with respect to the fracture surface is 80% or more is obtained.

Further, if the clearance *T* between the die and the punch and the thickness *t* of the flat type wire rod are made to satisfy the above-described equation (I), the ratio of the shear surface can be increased.

BRIEF DESCRIPTION OF THE DRAWINGS

FIG. 1 is an outline view showing an example of a metallic slide fastener element of the invention.
FIG. 2 is an explanatory view of a process for expressing steps of manufacturing the element successively in a same drawing.
FIG. 3 is a longitudinal sectional view schematically showing a punch and a die applied to a manufacturing method of the invention.
FIG. 4 is a plan view schematically showing a peripheral cut region of the element.
FIG. 5 is a sectional view schematically showing the punch and the die when cutting out an element taken along the line V-V in FIG. 2.
FIG. 6 is a sectional view schematically showing the punch and the die when cutting out an element taken along the line VI-VI in FIG. 2.
FIG. 7 is a perspective view of an element according to a first embodiment of the invention as seen from a left side.
FIG. 8 is a perspective view of the element according to the first embodiment as seen from a right side.
FIG. 9 is a perspective view of an element according to a second embodiment of the invention as seen from a left side.
FIG. 10 is a perspective view of the element according to the second embodiment as seen from a right side.
FIG. 11 is a perspective view of a conventional element according to a comparative example as seen from a left side.
FIG. 12 is a perspective view of the conventional element as seen form a right.
FIG. 13 is a partial plan view of a fastener chain on which the elements shown in FIG. 1 are mounted.

DESCRIPTION OF THE PREFERRED EMBODIMENTS

Hereinafter, preferred embodiments of a metallic slide fastener element called individual element of the invention and a method for manufacturing the same will be described with reference to the accompanying drawings. An element 1 of the invention has been described in the patent document 3 and has the above-described shape and structure as shown in FIG. 1. Although the element 1 having the same shape and structure as the patent document 3 has been mentioned here, naturally, it is possible to adopt the shape and structure of the element described in each of the patent documents 1 and 2 and the other shape and structure.

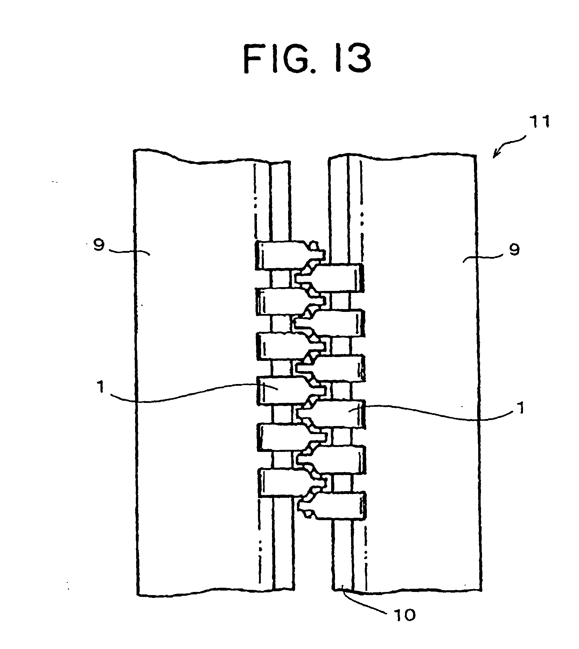

The metallic element 1 of this embodiment has projecting portions 3, which are engagement portions, in central portions of front and rear faces of a thin flat plate portion 8 of a coupling head 2 in which a trapezoidal shape and a rectangular shape are combined. As for a shape of each projecting portion 3, as shown in FIG. 1, this projecting portion provides a substantially pyramidal volume, which is longer in a width direction of the element 1 and in which the sectional area of a rectangular section in plan view decreases successively in a direction of leaving the thin flat plate portion 8. Further, a substantially U-shaped projecting edge portion 5 is provided on a side of right and left leg portions 4 of the thin flat plate portion 8 as if the projecting edge portion surrounds the projecting portion 3 with a predetermined gap with the same thickness as the leg portions 4 . A substantially U-shaped fitting concave portion 6, to which a part of the projecting portion 3 of a mating element 1 is fitted when a fastener chain 10 shown in FIG. 13 is in engagement, is formed between the projecting portion 3 and the projecting edge portion 5. The pair of leg portions 4 are extended from an end face of the projecting edge portions 5 such that they are branched to right and left sides on the same plane. The thickness of each of the right and left leg portions 4 and the projecting edge portion 5 in the vertical direction is substantially three times the thin flat plate portion 8. Further, a pair of right and left nipping portions 7 are provided at ends of the right and left leg portions 4 such that they extend so as to approach each other.

A punched product (element material 1') of the element 1 having such a shape and structure is produced successively and continuously from a flat type wire rod 11 shown in FIG. 2 through plural press processes. The flat type wire rod 11 is carried intermittently from the left side to the right side in the same figure while stopped each time when pressing is carried out. The thickness of this flat type wire rod 11 is equal to the thickness of each of the right and left leg portions 4 and the projecting edge portion 5. In a first press process (A), a hatched portion of the flat type wire rod 11 is pressed by a molding die (not shown) from above and below, and as shown in (A) of the same figure, a coupling head area E is formed in the flat type wire rod 11. The projecting portion 3, and the thin flat plate portion 8 and the fitting concave portion 6 are simultaneously formed in this coupling head area $E$ by pressing.

In a second press process shown in (B) of FIG. 2, the hatched portion is punched out by a die and a punch having the shape indicated with a phantom line with the coupling head area E, the substantially U-shaped projecting edge portions 5 and the right and left leg portions 4 left do as to provide a shape of a third step (C) shown in FIG. 2. Next, a remaining portion of the vertex of the coupling head 2 is punched out with the die and punch indicated by a phantom line in (C) of FIG. 2 and consequently, an element material 1' having a desired shape shown in (D) of FIG. 2 is produced. Such a manufacturing process is not particular to the invention but a process executed in the past.

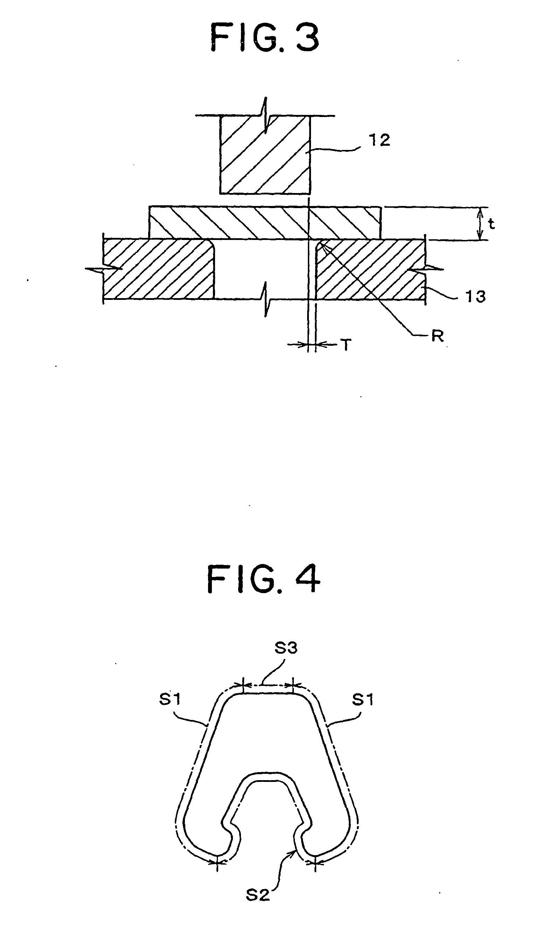

The characteristic portion of the manufacturing method according to the invention is shown schematically in FIG. 3. As shown in FIG. 3, the dimension of a clearance $T$ formed between the punch 12 and the die 13 is an important point for execution of the invention. In addition, forming roundness on a ridge line portion of amouth (shoulder) of the die, that is, chamfering, is also an important point. According to this embodiment, the value of the aforementioned $T$ is 0 to 30 $\mu$m, preferably in a range of 0.1 to 10 $\mu$m. If the value $T$ is 0 $\mu$m, naturally, catching is generated between the punch and the die, hampering a smooth pressing. If it is 30 $\mu$m or more, a fracture surface increases in a punched face (cut surface), so that the ratio occupied by the shear surface, which is an initial object of the invention, drops largely below 80%. The appropriate value is in a range of 0.1 to 10 $\mu$m. Further, if the mouth (shoulder) of the die is chamfered, the radius $R$ of the roundness is set to 0.01 to 1. 0 mm. If this radius $R$ is 0.01 mm or less, the fracture surface originating from crevice increases in the cut surface of a pressed product. If the radius $R$ is 1.0 mm or more, the cutting itself is not carried out smoothly, so that not only the fracture surface increases but also a cut end is often curved or inclined.

As described previously, for this type of element 1, the element material 1' obtained by the press work undergoes a finishing process by barrel polishing or chemical polishing. Due to this polishing process, the roughness of a cut surface of the element material 1' tends to become rough. For the reason, in order to make the shear surface, which forms the characteristic portion of the invention, of the finished element 1 80% or more, it is necessary to form a shear surface wider than that value at the stage of the element material 1'. The factor affecting the shear surface at this time is the surface roughness $Ra$ in the cut surface of the element material 1'. According to this embodiment, the average surface roughness $Ra$ is set to 1.0$a$ or less and preferably, it is set to 0.5a or less. Such a value can make the ratio, in which the shear surface occupies the cut surface in the element 1 after following polishing processing, is carried out to be 80%, preferably 90%.

According to this embodiment, as regards all cut surfaces of the element material 1', the ratio of the shear surface with respect to the fracture surface is not set 80% or more. FIG. 4 indicates a boundary between a region S1 having the shear surface of 80% or more in the element 1 and a region S2 satisfying the shear surface of 80% or less. A region indicated with a symbol S3 in FIG. 4 indicates a portion which is not exposed outside when elements are engaged and which is hidden between the engaged elements, and it is preferable that the shear surface of the region S3 is set to 80% or more following the region S1 if possible. That is, in the element 1 shown in FIG. 4, right and left side faces of the coupling head 2 and an outside peripheral side faces of the right and left leg portions 4 are the region S1 while an inner peripheral side faces of the right and left leg portions 4 are S2. The remaining vertex of the coupling head 2 is the region S3.

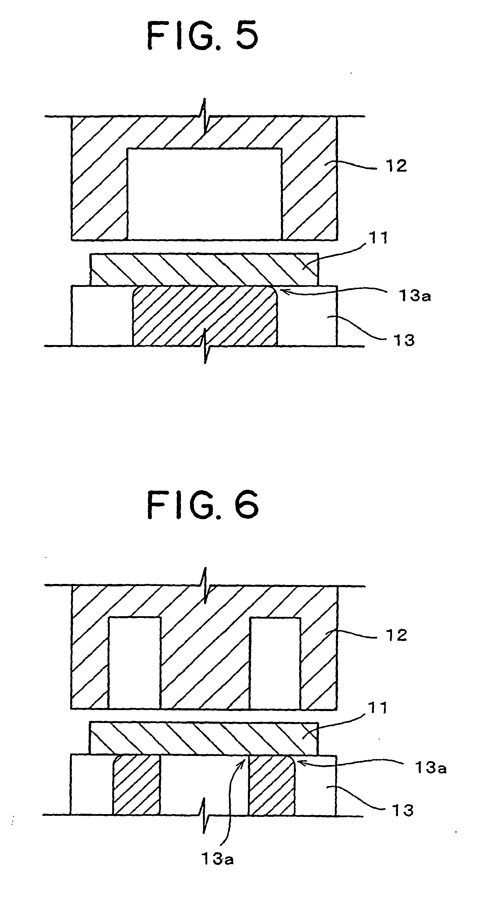

To form the outside peripheral side face region S1 and the coupling head vertex face S3 , as shown in FIG. 5, the clearance $T$ having the above-described predetermined dimension is formed between the punch 12 and the die 13, which constitutes the characteristic portion of the invention, and the ridge line portion of the mouth (shoulder) of the die 13 is chamfered at a radius $R$ which is defined by the aforementioned predetermined value. As a result, the ratio of the shear surface can be 80% or more in the cut surfaces in the regions S1 and S3. As for the inner peripheral side face region S2 of the right and left leg portions 4, as shown in FIG. 6, the dimension of the clearance $T$ formed between the punch 12 and the die 13 is set to the same as or a higher dimension than the conventional dimension over the aforementioned dimension specified according to the invention, and the mouth (shoulder) 13a of the die 13 is not chamfered. Alternately, if the aforementioned dimension specified by the invention is exceeded by the dimension of the clearance *T*, the ratio of the shear surface decreases extremely, so that the ratio of the fracture surface exceeds 50%.

In addition, if in the inner peripheral side face region S2 of the right and left leg portions 4, the dimension of the clearance *T* defined between the punch 12 and the die 13 is set to the aforementioned dimension specified by the invention and the mouth (shoulder) 13a of the die 13 is not chamfered, the ratio of the shear surface increases but it is difficult for it to exceed 80%. From this fact, it is understood that for manufacturing of the element 1 of the invention, the clearance *T* which satisfies the aforementioned value in the invention and chamfering at the radius *R* are indispensable. By forming the region S2 having a number of fractures faces in the inner peripheral faces of the right and left leg portions 4, biting into the aforementioned side edge of the fastener tape 9 including a core thread portion 10 increases, so that a strong mounting is enabled.

Further, according to a preferred embodiment, the clearance *T* ($\mu$m) between the punch 12 and the die 13 and the thickness *t* (mm) of the flat type wire rod need to satisfy the following equation (I).

$$0 < T/t \leq 0.001 \quad \cdots \quad (1)$$

If the clearance *T* and the thickness *t* of the flat type wire rod satisfy the equation (I) , the ratio of the shear surface increases.

Next, specific examples of the present invention will be described by comparing with a conventional example.

(EXAMPLES)

The clearance T between the punch 12 and the die 13 shown schematically by FIGS. 5 and 6 is set to 5 $\mu$m (Example 1), 20 $\mu$m (Example 2) and 0 $\mu$m (Comparative example). In addition, the shoulder of the die 13 for cutting the outside peripheral side face region S1 and the coupling head vertex face region S3 in Examples 1 and 2 is chamfered at the radius *R* of 0.15 mm, and the shoulder of the die 13 for forming the outside peripheral side face region S1, which is an outside cut surface of the right and left leg portions 4, is chamfered at the radius *R* of 0.15 mm also like the outside peripheral side face region S1 and the coupling head vertex face region S3, as shown in Fig. 6. On the other hand, the shoulder of the die 13 for forming the inner peripheral side face region S2, which is an inside cut surface of the right and left leg portions 4, is not chamfered. Further, in the comparative example, the shoulder of the die 13 is not chamfered. As the flat type wire rod 11 which is a raw material of the element 1, aluminum alloy of 0.9 to 1.5 mm in thickness was used depending on the size of the element 1 for both Examples 1 and 2 and Comparative example.

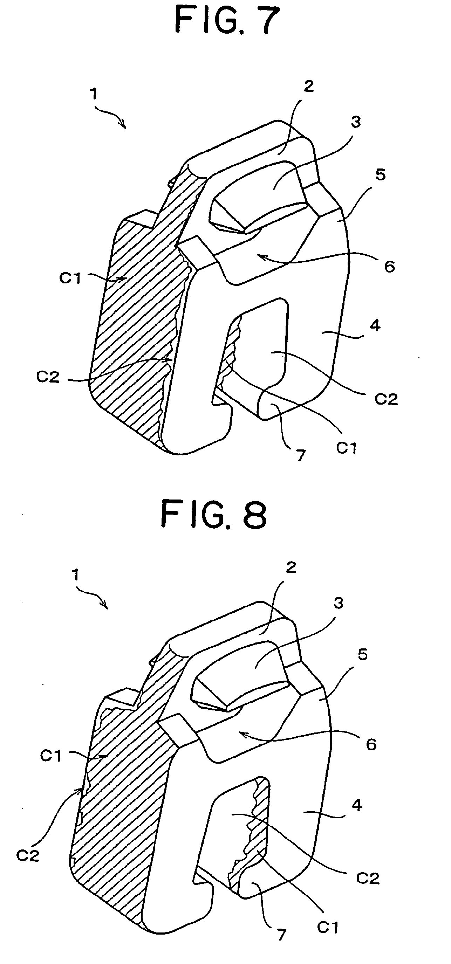

FIGS. 7 to 12 show an appearance condition of the shear surface and fracture surface of the right side face and left side face in each element 1 having an intermediate size according to Examples 1 and 2 and Comparative example. These figures are views of photographs of each element 1 taken with light projected obliquely downward to the element 1 from above. Its hatched area indicates a shear surface region C1 and in the photograph, this area is expressed in dark black. On the other hand, a non-hatched area indicates a fracture surface region C2 and in the photograph, this area is expressed in white. An evaluation on each element described below is taken upon an element which is obtained by applying barrel polishing on the element material 1' punched out with the punch 12.

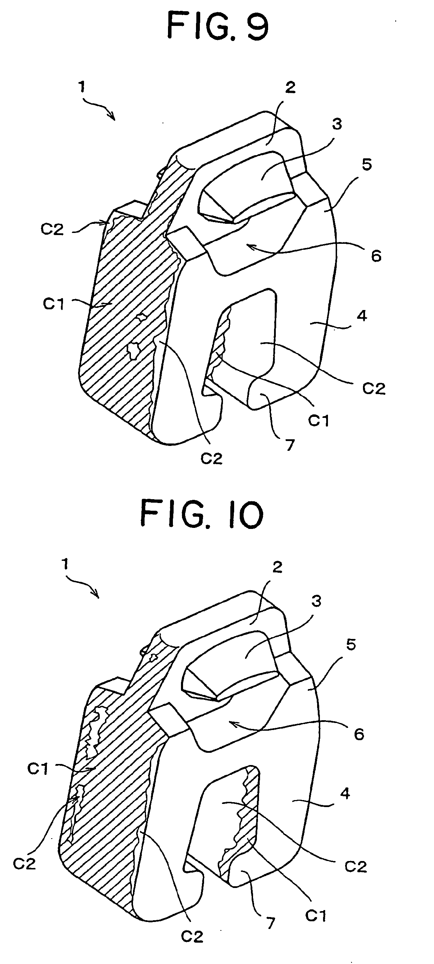

According to FIG. 7, which is a perspective view taken from the left side, as for the element 1 of Example 1, the shear surface region C1 on the outside peripheral side face of the element 1 is 98% or more, and most part is the shear surface. According to FIG. 8, which is a perspective view taken from the right side, the shear surface region C1 on the outside peripheral side face occupies 95% or more. As for the element of Example 2, according to FIG. 9, which is a perspective view taken from the left side, the shear surface region C1 on the outside peripheral side face of the element 1 occupies 85% or more, and according to FIG. 10, which is a perspective view taken from the right side, the shear surface region C1 on the outside peripheral side face occupies near 90%.

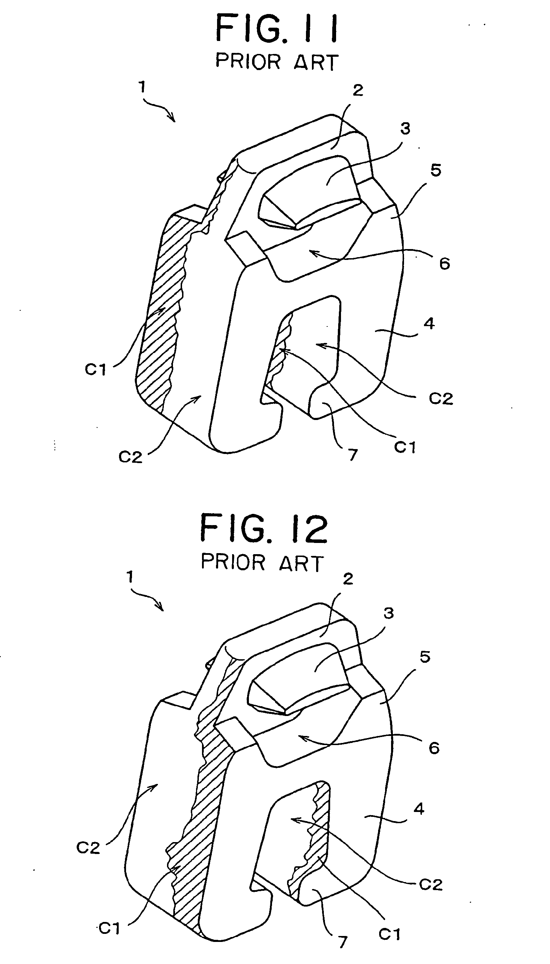

On the other hand, in case of the element 1 according to Comparative example, as shown in FIG. 11, which is a perspective view taken from the left side, the shear surface region C1 on the outside peripheral side face of the element 1 is far below 50%, and also as shown in FIG. 12, which is a perspective view taken from the right side, the shear surface region C1 on the outside peripheral side face is 50% or less. As regards the inner peripheral side face of each of the right and left leg portions 4 of the element 1, few shear surface exists in any case of Examples 1 and 2 and Comparative example, and the fracture surface occupies 80% or more.

As understood from above description, according to the metallic slide fastener element 1 of the invention obtained by punching out the flat type wire rod, the surface of an exposed portion outside when it is installed on the fastener tape 9 is constituted of the shear surface of 80% or more, as compared with the metallic element manufactured in the conventional method. Accordingly, its appearance is finished very beautiful and if the inner peripheral side face of each of the right and left leg portions 4 is constituted of the fracture surface of 50% or more, the installation strength when it is installed on the fastener tape 9, particularly its laterally pulling strength is intensified. Thus, the slide fastener on which the same elements 1 are mounted is preferably attached to a high quality product such as a high quality brand product.

**Claims**

1. A slide fastener element (1) manufactured by punching out a metallic flat type wire rod (11) with a press, **characterized in that**
at least a cut surface of a side face region comprising right and left side faces of a coupling head (2) and an outside peripheral side faces of right and left leg portions (4) has, as seen from a plan view, a shear surface of 80% or more and a fracture surface of less than 20%.

2. The slide fastener element according to claim 1, **characterized in that** an average surface roughness (*Ra*) of the shear surface on a cut surface of an element material (1'), which is immediately after punched out, is 1.0*a* or less.

3. The slide fastener element according to claim 2, **characterized in that** the average surface roughness (*Ra*) of the shear surface on the cut surface is 0.5a or less.

4. The slide fastener element according to claim 1, **characterized in that** a cut surface of an inside of at least the leg portions (4) of the slide fastener element (1) has a shear surface of less than 80% while the remainder is a fracture surface.

5. The slide fastener element according to claim 4, c**haracterized in that** the cut surface of the inside of at least the leg portions (4) of the slide fastener element (1) has a shear surface of less than 50%.

6. A method for manufacturing a slide fastener element by disposing a metallic flat type wire rod (11) on a die (13) and punching out the flat type wire rod (11) with a punch (12), **characterized in that**
a mouth on a punch side of the die (13) or a peripheral edge (13a) of the die (13) is chamfered at a radius of 0.01 to 1.0 mm, and a clearance (*T*) between the punch (12) and the die (13) is 0 to 30 $\mu$m in order to punch out the flat type wire rod (11) with the punch (12).

7. The method for manufacturing the slide fastener element according to claim 6, **characterized in that** the clearance (*T*) between the punch (12) and the die (13) is 0.1 to 10 $\mu$m.

8. The method for manufacturing the slide fastener element according to claim 6, **characterized in that** the clearance (*T*) between the punch (12) and the die (13) and the thickness (*t*) of the flat type wire rod (11) satisfy the following equation (I):

$$0 < \text{T/t} \leq 0.001 \quad \cdots \quad (\text{I}).$$

**Patentansprüche**

1. Reißverschlußelement (1), hergestellt durch Ausstanzen aus einem metallischen flachtypigen Walzdraht (11) mittels einer Presse, **dadurch gekennzeichnet, daß**
wenigstens eine Schneidefläche eines Seitenflächenabschnitts aufweisend rechte und linke Seitenflächen eines Kopplungskopfs (2) und außenseitige Randseitenflächen eines rechten und linken Beinbereichs (4) eine in Draufsicht gesehene Schnittfläche von 80 % oder mehr und eine Bruchfläche von weniger als 20 % aufweist.

2. Reißverschlußelement nach Anspruch 1, **dadurch gekennzeichnet, daß** eine durchschnittliche Flächenrauheit (Ra) der Schnittfläche an einer Schneidefläche eines Elementmaterials (1') unmittelbar nach dem Ausstanzen 1.0a oder weniger beträgt.

3. Reißverschlußelement nach Anspruch 2, **dadurch gekennzeichnet, daß** die durchschnittliche Flächenrauheit (Ra) der Schnittfläche an der Schneidefläche 0.5a oder weniger beträgt.

4. Reißverschlußelement nach Anspruch 1, **dadurch gekennzeichnet, daß** die Schneidefläche einer Innenseite von wenigstens den Beinbereichen (4) des Reißverschlußelements (1) eine Schnittfläche von weniger als 80 % aufweist, während die verbleibende Fläche eine Bruchfläche ist.

5. Reißverschlußelement nach Anspruch 4, **dadurch gekennzeichnet, daß** die Schneidefläche an der Innenseite wenigstens der Beinbereiche (4) des Reißverschlußelements (1) eine Schnittfläche von weniger als 50 % aufweist.

6. Verfahren zur Herstellung eines Reißverschlußelements durch Anordnung eines metallischen flachtypigen Walzdrahts (11) auf einem Stempel (13) und durch Ausstanzen des flachtypigen Walzdrahts mit einem Stanzstempel (12), **dadurch gekennzeichnet, daß**
eine Mündung an einer Stanzseite des Stempels (13) oder eine Randkante (13a) des Stempels (13) mit einem Radius von 0.01 bis 1.0 mm abgerundet ist, und ein Zwischenraum (T) zwischen dem Stanzstempel (12) und dem Stempel (13) 0 bis 30 $\mu$m beträgt, um den flachtypigen Walzdraht (11) mit dem Stanzstempel (12) auszustanzen.

7. Verfahren nach Anspruch 6, **dadurch gekennzeichnet, daß** der Zwischenraum (T) zwischen dem Stanzstempel (12) und dem Stempel (13) 0.1 bis 10 $\mu$m beträgt.

8. Verfahren nach Anspruch 6, **dadurch gekennzeichnet, daß** der Zwischenraum (T) zwischen dem Stanzstempel (12) und dem Stempel (13) und die Dicke (t) des flachtypigen Walzdrahts (11) der folgenden Gleichung (I) genügt:

$$0 < T/t \leq 0.001 \qquad\qquad (I).$$

**Revendications**

1. Elément (1) de fermeture à glissière fabriqué en découpant une tige (11) de fil métallique du type méplat au moyen d'une presse, **caractérisé en ce qu'**
au moins une surface de coupe d'une région de face latérale comprenant des faces latérales droite et gauche d'une tête d'accouplement (2) et des faces périphériques extérieures de parties branches (4) droite et gauche, présente, vu en plan, une surface de cisaillement de 80 % ou plus, et une surface de fracture inférieure à 20 %.

2. Elément de fermeture à glissière selon la revendication 1, **caractérisé en ce que** la rugosité superficielle moyenne (*Ra*) de la surface de cisaillement située sur une surface de coupe d'un matériau (1') d'élément, immédiatement après la découpe, est de 1,0 a ou moins.

3. Elément de fermeture à glissière selon la revendication 2, **caractérisé en ce que** la rugosité superficielle (*Ra*) moyenne de la surface de cisaillement située sur une surface de coupe est de 0,5 a ou moins:

4. Elément de fermeture à glissière selon la revendication 1, **caractérisé en ce que** la surface de coupe de l'intérieur d'au moins les parties branches (4) de l'élément (1) de fermeture à glissière, présente une surface de cisaillement inférieure à 80 % tandis que la surface restante est une surface de fracture.

5. Elément de fermeture à glissière selon la revendication 4, **caractérisé en ce que** la surface de coupe de l'intérieur d'au moins les parties branches (4) de l'élément (1) de fermeture à glissière présente une surface de cisaillement inférieure à 50 %.

6. Procédé de fabrication d'élément de fermeture à glissière consistant à disposer une tige (11) de fil métallique du type méplat sur une matrice (13) et à découper la tige (11) de fil métallique du type méplat avec un poinçon, **caractérisé en ce qu'**
une embouchure située côté poinçon de la matrice (13) ou un bord périphérique (13a) de la matrice (13) est chanfreinée avec un rayon de 0,01 à 1,0 mm et que le jeu (*T*) entre le poinçon (12) et la matrice (13) est de 0 à 30 $\mu$m, afin de découper la tige (11) de fil métallique du type méplat avec le poinçon (12).

7. Procédé de fabrication de l'élément de fermeture à glissière selon la revendication 6, **caractérisé en ce que** le jeu (*T*) entre le poinçon (12) et la matrice (13) est de 0, 1 à 10 μm.

8. Procédé de fabrication de l'élément de fermeture à glissière selon la revendication 6, **caractérisé en ce que** le jeu (*T*) entre le poinçon (12) et la matrice (13) et l'épaisseur (t) de la tige (11) de fil métallique du type méplat satisfont à l'équation suivante (I) :

$$0 < T/t \leq 0,001 \dots \qquad (I).$$

# FIG. 1

# FIG. 2

# FIG. 3

# FIG. 4

# FIG. 5

# FIG. 6

# FIG. 7

# FIG. 8

# FIG. 9

# FIG. IO

# FIG. 11
## PRIOR ART

# FIG. 12
## PRIOR ART

# FIG. 13